# EUROPEAN PATENT APPLICATION

(11) **EP 1 760 319 A1**
(43) Date of publication of application: **07.03.2007**
(21) Application number: 05751121.4
(22) Date of filing: 20.06.2005
(51) Int. Cl.: F04D 19/04, F16C 27/06, F16C 37/00

(54) **BEARING SUPPORT STRUCTURE FOR TURBOMOLECULAR PUMP**

(30) Priority: 25.06.2004 JP 2004188080
(71) Applicant: Osaka Vacuum, Ltd., Chuo-ku Osaka-shi Osaka 5410041 (JP)
(72) Inventor: IGUCHI, Masashi, Osaka Vacuum, Ltd., Osaka-shi, Osaka 5410041 (JP); UEHARA, Takahiro, Osaka Vacuum, Ltd., Osaka-shi, Osaka 5410041 (JP); NAKATSUJI, Shigeyoshi, Osaka Vacuum, Ltd., Osaka-shi, Osaka 5410041 (JP)
(74) Representative: Kronthaler, Wolfgang N.K.
(86) International application number: PCT/JP2005/011244
(87) International publication number: WO 2006/001243

(57) **Abstract**

The present invention herein provides a bearing-support structure for a turbo-molecular pump in which a rotation axis is rotatably supported by rolling bearings and the bearing-support structure permits the absorption of any fine vibrational motion generated at the bearings and the elimination of any heat generated by these bearings and the structure further has a long service life and high safety.

In the bearing-support structure for a turbo-molecular pump, ball bearings 4, 5, which rotatably support a rotation axis 1, are fitted in an upper first sleeve 6 and a lower second sleeve 7 respectively, while the outer periphery and one end face of the outer ring of each bearing 4, 5 are pressed against each of these corresponding sleeves, each of the upper first sleeve 6 and the lower second sleeve 7 is formed into a double structure comprising an inner sleeve and an outer sleeve, a gel layer 6c or 7c having a desired heat conductivity is arranged between these inner and outer sleeves and O-rings 6d, 6e or O-rings 7d, 7e are positioned before and behind the gel layers 6c, 7c to thus seal these gel layers 6c, 7c.

## Description

### Technical Field

The present invention relates to a bearing-support structure for a turbo-molecular pump provided with a rotor capable of rotating at a high speed and used for establishing a pressure falling within the range of from medium vacuum to ultra-high vacuum and more specifically to a bearing-support structure for a turbo-molecular pump, in which the rotation axis of the rotor thereof is rotatably supported by upper and lower rolling bearings both of which are lubricated with grease.

### Background Art

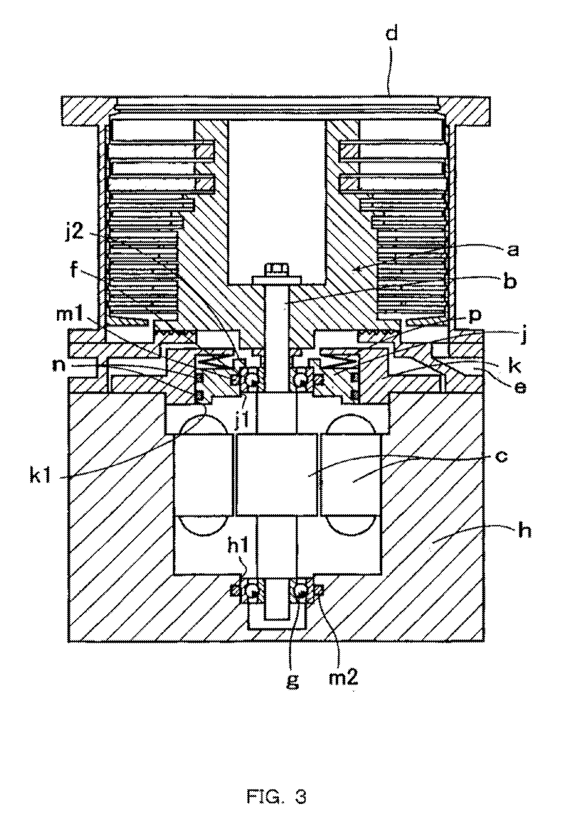

Fig. 3 shows a longitudinal cross-sectional view illustrating an example of the conventional turbo-molecular pump.

More specifically, reference symbols a, b and c represent a rotor, a rotation axis and a motor of such a turbo-molecular pump, respectively in this figure 3.

The rotation axis b and rotor a are rotated at a high speed in response to the operation of the motor c so that the turbo-molecular pump draws gases through an intake vent d, while exhausting gases through an exhaust vent e.

The rotation axis b is rotatively supported by an upper first ball bearing f and a lower second ball bearing g within a housing h.

The second ball bearing g is fitted in a circular hole h1 formed on the housing h while leaving a fine clearance between the inner wall of the hole and the outer peripheral portion of the second ball bearing g and, at the same time, it is supported by an O-ring m2 arranged within the circular hole h1 while ensuring the heat insulation, but the lower side face of the outer ring of the second ball bearing g is pressed against the housing h so that they are brought into close contact with one another. For this reason, the heat generated by the second ball bearing g is transmitted to the housing h and then radiated in the environmental atmosphere through the same.

On the other hand, the first ball bearing f is fitted in a circular hole j1 formed on a bearing sleeve j while leaving a fine clearance between the inner wall of the hole and the outer peripheral portion of the first ball bearing f and, at the same time, it is supported by an O-ring m1 arranged within the circular hole j1 while ensuring the heat insulation, but the upper end face of the outer ring of the first ball bearing f is pressed against a flange portion j2 inward projected from the side of the bearing sleeve j so that it comes in close contact with the same. For this reason, the heat generated by the first ball bearing f is transmitted to the bearing sleeve j through the foregoing flange portion j2.

However, the bearing sleeve j is fitted in a circular hole kl positioned on a sleeve case k, while leaving a fine clearance between the inner wall of the hole and the outer peripheral portion of the bearing sleeve j and, at the same time, it is supported by an O-ring n arranged within the circular hole k1, while ensuring the heat insulation. Moreover, the upper end portion of the bearing sleeve j is simply pressed against the sleeve case k through a spring P. Accordingly, a problem arises such that any heat is not satisfactorily transmitted from the bearing sleeve j to the sleeve case k.

The motor c and the ball bearings f and g generate heat when the molecular pump is operated and this leads to an increase in the temperature of the rotation axis b and the ball bearings f and g, but a vacuum is established within the turbo-molecular pump and accordingly, almost all of the heat thus generated should be transmitted to the housing h through the foregoing ball bearings f and g and then radiated in the environmental atmosphere through the housing or the housing should be cooled with, for instance, cooling water. As has been discussed above, if the heat transfer through the bearing sleeve j is insufficient, this molecular pump suffers from a problem in that the foregoing first ball bearing f undergoes overheating.

In addition, the both ball bearings f and g can hold their stable rotational motions when a desired thrust (a pre-load) along the axial direction is applied to them by the action of the foregoing spring P, but a problem arises such that sometimes the foregoing thrust generated by the spring P along the axial direction is not transmitted to the ball bearings f and g because of the sliding resistance generated by the O-ring n existing between the bearing sleeve j and the sleeve case k and, in this case, the ball bearings f and g undergo vibrational motions and/or generate noises.

As a measure for solving these problems, there has been proposed a molecular pump which is designed so as to have such a structure that the rotation axis of the molecular pump is rotatably supported by two paired ball bearings arranged above and below the rotation axis of the pump respectively, wherein one of these two paired ball bearings are fitted in a bearing sleeve provided with a flange portion pressed against the end face of the outer ring of the ball bearing while leaving a fine clearance between the inner wall of the sleeve and the outer peripheral portion of the ball bearing. In addition, the bearing sleeve is slidably fitted in a circular hole of a sleeve case fixed to the housing of the molecular pump while leaving a fine clearance between the wall of the hole and the outer peripheral portion of the bearing sleeve and, at the same time, the molecular pump is completely free of any O-ring lying between the outer peripheral portion of the bearing sleeve and the circular hole of the sleeve case (see, for instance, Patent Article 1 given below).

Moreover, as examples in which an elastic support-ring is arranged between the outer ring of a bearing and a housing to thus elastically support the bearing, there have been known an elastic bearing-support device (see, for instance, Patent Article 2 given below) in which the bearing is elastically supported through an elastic support-ring mounted between the outer ring of the bearing and the housing and which is characterized in that the elastic support-ring has a circumferential groove on the outer peripheral surface of the ring corresponding to the outer ring of the bearing and having a width greater than that of the foregoing outer ring and that the ring is provided with portions capable of being engaged with the housing at least on the both sides thereof, or a rotation machine (see, for instance, Patent Article 3 given below) characterized in that a bearing portion rotatably supporting a body of revolution is supported on a principal body portion through a damping member filled with grease or an elastomer.
Patent Article 1: Japanese Un-Examined Patent Publication 2003-172288
Patent Article 2: Japanese Un-Examined Utility Model Publication Sho 56-97621
Patent Article 3: Japanese Un-Examined Patent Publication Hei 10-288195

### Disclosure of the Invention

### Problems That the Invention is to Solve

According to the invention disclosed in the foregoing Patent Article 1, one of the two paired ball bearings are fitted in the bearing sleeve, with which the outer peripheral portion of the ball bearings are engaged, while leaving a fine clearance between the sleeve and the outer peripheral portions of the ball bearings; and the bearing sleeve is fitted in the circular hole of the sleeve case fixed to the housing while leaving a fine clearance between the hole and the bearing sleeve. However, the molecular pump having such a construction suffers from a problem such that these two circumferential clearances are insufficient for the absorption of any vibrational motion of the foregoing ball bearings generated during the operation of the pump.

Moreover, the technique disclosed in the foregoing Patent Article 2 suffers from a problem in that the heat generated by the rotation axis and the bearing portions is hardly transferred to the housing and this results in the overheating of the bearing since the bearings are supported by the housing through the elastic support-ring. Further, this technique sometimes suffers from a problem in that when the elastic support-ring, which supports the bearings, is only weakly elastic, it would be difficult to hold the rotation axis at its correct center and that the tip of the rotor blade may occasionally come in contact with the internal wall of the housing.

Additionally, the technique disclosed in the foregoing Patent Article 2 likewise suffers from such a problem that the pump lacks of any supporting means for the end face of the outer ring of the bearing and therefore, the inclination of the outer ring is only weakly controlled and there would accordingly be such a risk that when using the same as bearings for rotation axes to be rotated at very high speed, it would undergo premature destruction.

Moreover, the technique disclosed in the foregoing Patent Article 3 also suffers from a problem in that the damping member filled with grease or an elastomer insufficiently transfers heat and this accordingly sometimes leads to the occurrence of overheating of the bearings.

Similarly, the technique disclosed in the foregoing Patent Article 3 also suffers from such a problem that since the inclination of the outer ring is only weakly controlled, there would thus be such a risk that when using the same as bearings for rotation axes to be rotated at a high speed, it would undergo premature destruction.

Accordingly, it is an object of the present invention to provide a bearing-support structure suitably used in a turbo-molecular pump of a type equipped with rolling bearings, which can solve the foregoing problems and more specifically to provide a bearing-support structure for a turbo-molecular pump, which never causes any overheating of bearings, which permits the maintenance of the rotation axis at its correct center, and which has an effect of absorbing any vibrational motion of the rotation axis.

### Means for the Solution of the Problems

According to the present invention, the foregoing object can be accomplished by providing a bearing-support structure for a turbo-molecular pump, in which upper and lower rolling bearings rotatably supporting a rotation axis are fitted in upper and lower sleeves rotatably supporting these bearings respectively, while the outer peripheral portion of the outer ring of each bearing and one end face thereof are pressed against the corresponding sleeve; either one of these upper and lower sleeves is fixed to a housing, while the other sleeve is fitted in and passes through a through hole therefor formed in the housing in such a manner that it can freely slide in the axial direction and which is equipped with a pre-load-applying spring capable of exerting a force in the axial direction on the foregoing upper and lower bearings, the bearing-support structure being characterized in that each of the foregoing upper and lower sleeves is so designed to have a double structure comprising an inner sleeve and an outer sleeve, that a space formed between these inner and outer sleeves is filled with a heat conductive gel to thus form a torus-shaped gel layer; and that elastic bodies such as O-rings are positioned at the both ends of the gel layer to seal or enclose the gel layer.

### Effects of the Invention

According to the present invention, there is provided a bearing-support structure for a turbo-molecular pump, which permits the elimination of any overheating of the bearing of the pump, which can maintain the rotation axis at its correct center and the correct alignment of the inner and outer rings of the bearing, while applying a pre-load to the bearings to thus enhance the durability of the bearings during their high speed rotational motions and which has an effect of absorbing any vibrational motion of the rotation axis. The present invention thus permits the reduction of any noise and vibrational motion possibly experienced or encountered when the turbo-molecular pump is operated and likewise permits the extension of the service life of the bearings.

### Best Mode for Carrying Out the Invention

The following are the description of Examples concerning the best mode for carrying out the present invention.

### Example 1

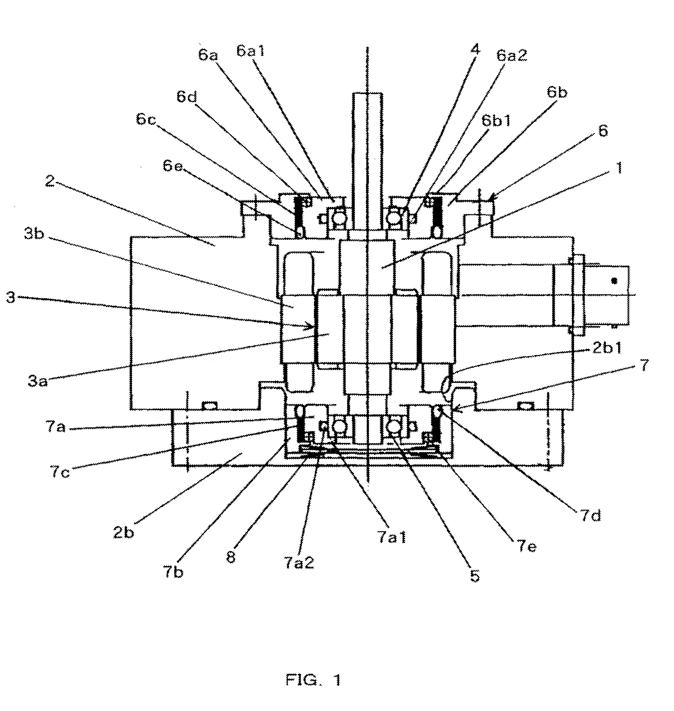

Fig. 1 is a longitudinal cross-sectional view showing a part of a turbo-molecular pump provided with the bearing-support structure according to the present invention or a bearing-support portion and in Fig. 1, there are omitted a rotor adhered to and engaged with the upper portion of a rotation axis 1 and an upper housing connected to the upper portion of an intermediate housing 2.

Reference numeral 3 represents a motor, and the motor 3 comprises a rotor 3a fixed to the outer periphery of the rotation axis 1 and a stator 3b fixed to the inner periphery of the intermediate housing 2.

Reference numerals 4 and 5 represent ball bearings, these ball bearings 4 and 5 are arranged above and below the motor 3 in such a manner that they sandwich the motor 3 and both of these ball bearings 4 and 5 are self-lubricating type ones in which grease has been enclosed.

Reference numeral 6 represents a first sleeve and this is so designed to have a double structure comprising an inner first sleeve 6a arranged on the inner peripheral side and an outer first sleeve 6b arranged on the outer peripheral side.

In this connection, the ball bearing 4 is fitted in the inner first sleeve 6a and the upper end of the outer ring of the ball bearing 4 is pressed against a flange portion 6a1 which is inwardly projected from the upper portion of the inner first sleeve 6a, to thus fix and support the ball bearing 4.

Incidentally, reference numeral 6a2 represents an O-ring used for forming a slight clearance between the outer periphery of the ball bearing 4 and the inner periphery of the inner first sleeve 6a and the O-ring 6a2 is fitted in a groove formed in the inner first sleeve 6a.

The outer first sleeve 6b is fixed to the upper portion of the intermediate housing 2 by any method, for instance, by fastening with a bolt.

A ring-shaped gel layer 6c is arranged between the inner first sleeve 6a and the outer first sleeve 6b and the gel layer 6c is enclosed within a space existing between the inner and outer first sleeves 6a and 6b by two O-rings positioned at the both ends of the layer 6c i.e. a first O-ring 6d and a second O-ring 6e, respectively

The first O-ring 6d is put in a groove formed on the upper portion of the inner first sleeve 6a at its outer corner and at the same time, the upper face of the first O-ring 6d is pressed against the lower face of a flange 6b1 which is inwardly projected from the upper portion of the outer first sleeve 6b to thus downward press the same.

More specifically, the outer first sleeve 6b prevents, through the first O-ring 6d, the inner first sleeve 6a from upwardly getting out of the housing 2.

Moreover, the foregoing second O-ring 6e lies between the external peripheral face of the inner first sleeve 6a and the internal peripheral face of the outer first sleeve 6b and the thickness of the second O-ring 6e is selected in such a manner that it can ensure or maintain a desired distance between the inner first sleeve 6a and the outer first sleeve 6b.

Reference numeral 7 represents a second sleeve, which is so designed that it has a double structure comprising an inner second sleeve 7a positioned on the inner side and an outer second sleeve 7b positioned on the outer side.

The foregoing ball bearing 5 is engaged in the inner second sleeve 7a and the ball bearing 5 is brought to a stop by pressing the lower end of the outer ring thereof against a flange portion 7a1 which is inwardly projected from the lower portion of the inner second sleeve 7a.

Reference numeral 7a2 represents an O-ring arranged between the outer peripheral portion of the ball bearing 5 and the inner peripheral portion of the inner second sleeve 7a in order to thus form a quite narrow clearance between these two peripheral portions and the O-ring 7a2 is engaged in the groove therefor formed on the inner second sleeve 7a.

The foregoing outer second sleeve 7b is freely slidably engaged, in the axial direction, in a through hole 2b1 formed through a lower housing 2b and further, the second sleeve 7b is upwardly pressed by the action of the upward spring force of a coned disc spring 8 whose bottom face is pressed against the lower housing 2b. This spring force is well-balanced with the compressive force of the flange 6b1 of the outer first sleeve 6b through a fourth O-ring 7e as will be described later and through the ball bearing 5, the rotation axis 1, the ball bearing 4 and the foregoing first O-ring 6d.

A ring-like gel layer 7c is positioned in the space formed between the inner second sleeve 7a and the outer second sleeve 7b and the two O-rings positioned at the both ends of the gel layer 7c i.e. the third O-ring 7d and the fourth O-ring 7e serve to tightly enclose the gel layer 7c between the foregoing inner and outer second sleeves 7a and 7b.

The foregoing third O-ring 7d lies between the external peripheral face of the inner second sleeve 7a and the internal peripheral face of the outer second sleeve 7b and the thickness of the third O-ring 7d is selected in such a manner that it can ensure or maintain a desired distance between the inner second sleeve 7a and the outer second sleeve 7b.

In addition, the fourth O-ring 7e is put in a groove formed on the lower portion of the inner second sleeve 7a at its external edge portion and at the same time, the lower face of the fourth O-ring 7e is pressed against the upper face of a flange 7b1 which is inwardly projected from the lower portion of the outer second sleeve 7b.

The foregoing gel layers 6c and 7c are formed from a heat conductive gel, which is in the form of a paste having a heat conductivity of at least 1 W/m k and examples of such layers practically used include, for instance, layers of DP-100 (trade name) and Heat Conductive HT Sheet (trade mark name).

In this respect, the foregoing heat conductive gel is one prepared by the incorporation of, for instance, metal powder having a high heat conductivity into a synthetic resin as a gel material to thus impart a high heat conductivity to the gel material.

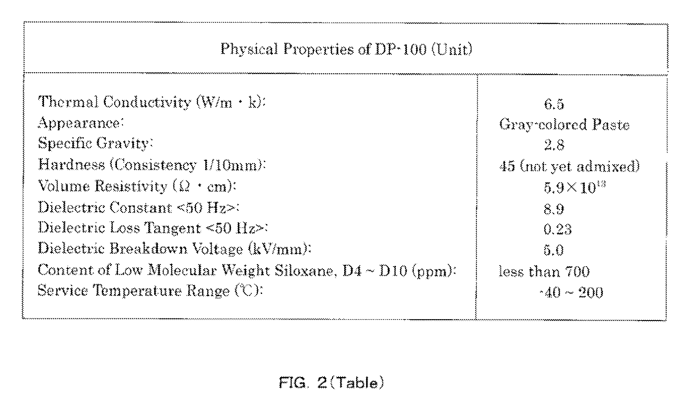

Physical properties of the foregoing DP-100 are summarized in the following Table given as Fig. 2.

The following are the explanation of the operations of the bearing-support structure for a turbo-molecular pump according to the present invention and the effects accomplished by the bearing-support structure.

The turbo-molecular pump is driven by the action of a motor 3 shown in Fig. 1 and more specifically, the motor 3 allows the rotation axis 1 to rotate at a high speed and simultaneously the rotor (not shown) which is engaged with and connected to the upper portion of the rotation axis 1 so that the pump undergoes desired evacuation.

The rotation axis 1 is freely rotatably supported by the two ball bearings 4 and 5 positioned upper and lower portions of the motor 3 and these ball bearings 4 and 5 may support and absorb all of the thrust forces generated on the rotation axis 1 in the upward and downward directions and the vibrational motions acting thereon in the radial directions. In addition, the coned, disc spring 8 applies, in the axial direction, a pre-load to these ball bearings 4 and 5 so as to impart, to these ball bearings, desired durability at high speed rotational motions.

However, the rotational center of the rotation axis 1, which rotates at a high speed together with the rotor is not always in good agreement with the center of the foregoing ball bearings 4 and 5 and the foregoing rotation axis 1 is apt to slightly eccentrically rotate. For this reason, the foregoing ball bearings 4 and 5 should undergo slight vibrational motions in the radial directions so as to cope with the eccentric rotational motions.

These vibrational motions are absorbed by either of the ring-like gel layers 6c and 7c fitted to the respective first and second sleeves 6 and 7 arranged on the outer peripheries of these ball bearings 4 and 5 and therefore, these ball bearings 4 and 5 can continue to rotate without being accompanied by any damage.

Moreover, the ball bearings 4 and 5 generate heat along with their rotation, the rotation axis 1 likewise generates heat as the motor 3 is operated and the heat originated from the rotation axis 1 is also transferred toward the ball bearings 4 and 5.

In general, the turbo-molecular pump is principally operated under a vacuum condition and for this reason, the rotation axis 1 and the ball bearings 4 and 5 are likewise positioned in a vacuum environment. Accordingly, the cooling of the ball bearings 4 and 5 is carried out while mainly relying on the heat conduction or transfer through the foregoing first sleeve 6 or the foregoing second sleeve 7.

The gel layers 6c and 7c for the absorption of any vibrational motions of the ball bearings 4 and 4 are arranged in the interior of the first sleeve 6 and the second sleeve 7, but these gel layers are formed from a material having a good heat conductivity and accordingly, the heat generated by the ball bearings 4 and 5 can easily be transferred to the exterior thereof or the intermediate housing 2 or the lower housing 2b to thus cool the ball bearings 4 and 5.

Furthermore, each of the first sleeve 6 and the second sleeve 7 is equipped with the O-ring 6e or 7d lying between the inner sleeve and the outer sleeve and a desired distance can, in turn, be maintained between the inner and outer sleeves because of the presence of these O-rings to thus ensure the safety of the blades of the rotor.

Moreover, these O-rings 6e and 7d are moderately elastic and they likewise play a role of absorbing the vibrational motions of the ball bearings 4 and 5 in conjunction with the gel layer 6c or 7c.

In this example, the ball bearing 4 and the ball bearing 5 are assumed to be self-lubricating type ball bearings in which grease is enclosed, but they may be ball bearings other than such grease-enclosed type ones, or they may likewise be rolling bearings such as roller bearings.

In addition, the gel layer 6c may be sealed in a flexible thin bag formed into a torus-shaped body in advance and then closely sandwiched between the inner sleeve 6a and the outer sleeve 6b or between the inner sleeve 7a and the outer sleeve 7b.

This would further ensure the prevention of any leakage of the gel and permit the improvement of the assembling ability thereof.

### Industrial Applicability

The present invention is used in the bearing-support structure for a turbo-molecular pump, which is provided with a rolling bearing such as a ball bearing.

### Brief Description of the Drawings

[Figure 1] Fig. 1 is a longitudinal cross-sectional view showing Example 1 of the bearing-support structure for a turbo-molecular pump according to the present invention.
[Figure 2] Fig. 2 is a table which shows physical properties of an example of the gel layer as a part of the bearing-support structure according to the foregoing Example 1.
[Figure 3] Fig. 3 is a longitudinal cross-sectional view showing an example of the bearing-support structure for a turbo-molecular pump according to one of the conventional techniques.

### Description of the Symbols

1: Rotation axis; 2, 2a: Housing (Intermediate housing, Lower housing); 2b1: Through hole for sleeve; 4, 5: Bearing (Ball bearing); 6, 6: Sleeve (First sleeve, Second sleeve); 6a, 7a: Inner sleeve; 6b, 7b: Outer sleeve; 6c, 7c: Gel layer; 6a2, 6d, 6e, 7a2, 7d, 7e: Elastic body (O-ring); 8: Spring for pre-loading bearings.

## Claims

1. A bearing-support structure for a turbo-molecular pump, in which upper and lower rolling bearings rotatably support a rotation axis, the bearing-support structure being **characterized in that** the upper and lower rolling bearings are rotatably supported within upper and lower sleeves each having double structure, which comprises inner and upper cylindrical members, respectively; that a clearance is formed between the inner sleeve and the outer sleeve constituting each of these upper and lower sleeves and a heat conductive gel is charged in the clearance to thus form each corresponding torus-shaped gel layer; and that, at the same time, elastic bodies such as O-rings are arranged at the both ends of each gel layer to thus closely enclose the gel layers.

2. The bearing-support structure for a turbo-molecular pump as set forth in claim 1, wherein the inner sleeve and the outer sleeve are formed and so designed that a desired clearance is maintained between these outer and inner sleeves by allowing one or both of the elastic bodies, which are arranged at the both ends of each gel layer, such as the O-rings to exist between these sleeves.

3. The bearing-support structure for a turbo-molecular pump as set forth in claim 1 or 2, wherein the upper and inner rolling bearings are fitted in each inner sleeve of the upper and lower sleeves each having a double structure, which rotatably support these bearings, while the outer peripheral portion and one end face of the outer ring of each bearing are pressed against each corresponding inner sleeve, wherein the outer sleeve of either of these upper and lower sleeves is fixed to a housing, while the other outer sleeve is fitted in a through hole therefor formed in the housing, in such a manner that it is freely slidable in the axial direction, and wherein it is further provided with a pre-load-applying spring which can apply a force in the axial direction to the upper and lower bearings.

4. The bearing-support structure for a turbo-molecular pump as set forth in any one of claims 1 to 3, wherein the gel-like material is sealed in a flexible and thin bag formed into a torus-like body and the resulting bad is arranged between the inner sleeve and the outer sleeve.

5. The bearing-support structure for a turbo-molecular pump as set forth in any one of claims 1 to 4, wherein the heat conductive gel is so designed that it has a heat conductivity of at least 1 W/m k.
